# EUROPÄISCHE PATENTSCHRIFT

(11) **EP 1 428 103 B1**
(45) Veröffentlichungstag und Bekanntmachung des Hinweises auf die Patenterteilung: **11.11.2015**
(21) Anmeldenummer: 02781089.4
(22) Anmeldetag: 12.09.2002
(51) Int. Cl.: G05B 19/418

(54) **VERFAHREN ZUR VORBEREITUNG, AUFBEREITUNG UND WARTUNG VON WERKZEUGDATEN**
METHOD FOR THE PREPARATION, TREATMENT AND UPDATING TOOL DATA
PROCEDE DE PREPARATION, DE TRAITEMENT ET D'ACTUALISATION DE DONNEES OUTILS

(30) Priorität: 12.09.2001 DE 10144977
(43) Veröffentlichungstag der Anmeldung: 16.06.2004
(73) Patentinhaber: Rexroth Indramat GmbH, 97803 Lohr am Main (DE)
(72) Erfinder: ZETEK, Berndt, 97816 Lohr am Main (DE); GÜNZELMANN, Andreas, 97982 Kreuzwertheim (DE)
(74) Vertreter: Thürer, Andreas
(86) Internationale Anmeldenummer: PCT/DE2002/003462
(87) Internationale Veröffentlichungsnummer: WO 2003/023545

(56) Entgegenhaltungen:
- EP-A- 0 618 026
- EP-A- 0 699 514
- EP-A- 1 018 676
- EP-A1- 0 927 600
- DE-A- 19 724 926
- DE-A- 19 807 343
- DE-A- 19 856 116

## Beschreibung

Die Erfindung betrifft ein Verfahren zur Vorbereitung, Aufbereitung und Wartung von Werkzeugdatensätzen für Bearbeitungsprozesse in einer NC-Steuerung mit zumindest einer bezüglich der Steuerung separaten Werkzeugdatenhaltung.

Die EP 0 927 600 A1 offenbart beispielsweise eine Presse mit einem Werkzeugvorrat, wobei Mittel vorgesehen sind, um Informationen bezüglich der Werkzeuge abzuspeichern und die Werkzeuge zu kennzeichnen, so dass die Werkzeuge von der Pressensteuerung identifizierbar sind.

Bedingt unter anderern durch die lokale Datenhaltung in der CNC werden bisher dynamische Werkzeugdaten, beispielsweise Verschleißwerte, vom Maschinenbediener manuell nachgepflegt und eingepflegt, bevor sich das System bezüglich der Werkzeugdaten in einem konsistenten Zustand befindet.

Aufgabe der vorliegenden Erfindung ist es, ein Verfahren zur Vorbereitung, Aufbereitung und Wartung von Werkzeugdatensätzen zu liefern, das universell einsetzbar ist und eine variable, automatische Pflege der Werkzeugdatensätze ermöglicht.

Die Aufgabe wird durch ein Verfahren gemäß Anspruch 1 gelöst.

Es kann bei einer Fremdapplikation oder von der SPS ohne Beteiligung der Werkzeugverwaltung ein Werkzeugdatensatz anhand vorhandener Werkzeuge nach Maßgabe der zugrundeliegenden Bearbeitungsprozesse erstellt und anschließend in die Werkzeugverwaltung importiert werden. Durch die einheitliche Form der Datensätze wird sichergestellt, dass die so erzeugten Datensätze auch entsprechend von der Werkzeugverwaltung erkannt werden können und richtig eingruppiert werden.

Eine rationelle Nutzung des Speicherplatzes und eine bessere Übersicht ist gegeben, well Listen mit Verweisen auf nicht oder nicht mehr vorhandene, d. h. aus der Werkzeugverwaltung gelöschte Werkzeuge, einer getrennten Listenverwaltung zugeführt werden.

Die Werte werden automatisch nach Maßgabe der aktuellen Bearbeitungsprozesse eingepflegt. Es ist nicht nur eine einzige Menge von Werkzeugen/Werkzeuglisten bekannt, sondern aufgrund der Verarbeitung in der Datenverarbeitungsanlage ist es möglich, eine Korrelation zu anderen Datensätzen, insbesondere der Werkzeugdaten und der Werkzeuglistendaten sowie der anwendungsfallbezogenen und der maschinenbezogenen Daten zu erhalten. Somit werden die Datensätze nicht mehrfach und inkonsistent gehalten sondern abgestimmt. Es werden Datensätze mit unterschiedlichen Werten und Werkzeugeigenschaften vermieden, was insbesondere verhindert, dass die Werkzeugdaten nicht den Eigenschaften des realen Werkzeugs und/oder der Umgebung, in der das Werkzeug eingesetzt werden soll, entsprechen. Durch die Erfindung findet eine Verringerung der Rüstzeiten an Werkzeugmaschinen statt, die Arbeitsvorbereitung wird unterstützt. Der Anwender wird bei der Werkzeugverwaltung unterstützt. Insbesondere findet sich eine Anwendung der Erfindung bei Numerische Steuerungen mit zentraler oder dezentraler Verwaltung von Werkzeugdaten, offline und/oder online- Daten getrennt, welche mit einem Werkzeugmanagementsystem arbeiten oder selbst ein solches enthalten.

Wenn auch statische Daten der Werkzeugdatensätze nach Maßgabe der aktuellen NC-Bearbeitungsprozesse aktualisiert werden können, liegt eine sehr bedienerfreundliche Oberfläche vor, die je nach Anwendungserfordernisse umgestaltet werden kann. Es kann somit eine Verwaltung von statischen und dynamischen Werkzeugdaten stattfinden. Wird der Datensatz eines Werkzeuges während der Werkstückbearbeitung auf einer NC-Maschinen verändert - dynam. Werkzeugdaten werden in der Regel autom. verändert, stat. Werkzeugdaten können, so sollen diese möglichst für alle weiteren Einsätze des Werkzeuges aktualisiert zur Verfügung stehen.

Die Sicherheit des Verfahrens ist erhöht, wenn eine automatische Erkennung von fehlerhaften und/oder inkonsistenten Werkzeuglisten erfolgt.

Ein wiederholtes Eingeben von Werkzeugdaten wird vermieden, wenn eine automatische Reparatur von fehlerhaften/inkonsistenten Werkzeuglisten erfolgt.

Ein schnelles und sicheres Anschließen an neue Umgebungen und Anlagen ist möglich, wenn eine automatische Werkzeugerkennung von in der CNC-Steuerung definierten neuen erzeugten Werkzeugen erfolgt.

Eine übersichtliche und zuverlässige Handhabung ist möglich, wenn die Werkzeugverwaltung die neu erstellten Werkzeuge erkennt und entsprechend ihren Eigenschaften gruppiert und verwaltet.

Bei ausreichender Erkennung, das d. h. Übereinstimmung mit einer vorbekannten Datensatzstruktur und vollständiger Werkzeugspezifikation, erfolgt eine vollständige Eingruppierung.

Eine korrekte Erkennung des Fremd-Werkzeugdatensatzes und eine Eingruppierung erfolgt somit, falls eine ausreichende Kompatibllität vorlegt, insbesondere eine gleiche Datensatzstruktur der Werkzeugdatensätze der Fremdapplikation und die Werkzeugspezifikation vollständig sind.

Vorteilhalft ist es, wenn bei unvollständigen oder fehlerhaften Werkzeugdatensätzen eine Eingruppierung als unvollständiger Datensatz erfolgt. Die unvollständigen oder fehlerhaften Werkzeugdatensätze werden als unbekanntes Werkzeug eingruppiert und/oder klassifiziert. Die zugehörigen Daten gehen somit nicht verloren, werden nicht beschädigt und führen somit nicht zum Absturz, d. h. zu einem Datenverlust.

Vorteilhaft ist es, wenn Platzdaten aus der Werkzeuglistenverwaltung und Werkzeugdaten aus der Werkzeugverwaltung kombiniert in die Steuerung downgeloaded werden. Dann liegen die sich entsprechenden und/oder aufeinander abgestimmten Daten gleichzeitig vor und können korreliert ausgewertet werden.

Eine immer an die tatsächlich zu einem bestimmten Zeitpunkt vorhandene Datenlage angepasste Situation liegt vor, wenn vor dem Downloaden zumindest ein Teil der Datensätze durch eine inhärente Upload-Funktion der verwendeten Werkzeugdaten vorher in der Werkzeugverwaltung aktualisiert werden.

Vorlagen mit Anwenderdaten, d.h. spezifische Werkzeugdaten, zur Erstellung und Konfiguration von Werkzeugen und Werkzeuglisten werden erstellt.

Eine Mehrklientenfähigkeit ist gegeben, wenn mehrere NC-Steuerungen und eine lokal/dezentrale Werkzeugdatenhalterung eingesetzt werden. Auf diese Weise kann eine beliebige Anzahl von Anwendern simultan mit der Werkzeugverwaltung arbeiten.

Eine flexible Nutzung ist möglich, wenn Untermengen des gesamten Bestands von Werkzeugen und/oder Werkzeugdaten getrennt verwaltet werden.

Vorteilhaft ist es, wenn Differenzlisten und/oder Teillisten gebildet und behandelt werden. Diese Differenzlisten werden aus dem Istzustand des Werkzeugspeichers und der vom Programmiersystem vorgegebenen Sollliste automatisch gebildet und nach Vorgaben des Anwenders optimiert, wobei Optimierungskriterien beispielsweise Werkzeugwechselzeiten oder Umrüstzeiten sind.

Eine schnelle und wenig aufwendige Anpasung an verschiedene Nutzer ist möglich, wenn eine getrennte Verwaltung von anwenderspezifischen, insbesondere Platzdaten, und werkzeugabhängigen Werkzeugdaten erfolgt. Damit ist eine Aktualisierung der Werkzeugdaten möglich, ohne dass Listen geändert werden müssten.

Eine zentrale Verwaltung ist möglich, wenn der gesamte Werkzeugbestand an Werkzeugen und/oder Werkzeugdaten einer oder mehrerer Maschinen mittels eines Managementsystems verwaltet werden kann. Die Maschinen, EDV-Anlagen insbesondere Industrie-PCs werden durch ein Managementsystem insbesondere in Form einer besonders ausgestatteten EDV-Anlage zentral verwaltet.

Vorteilhaft ist es, wenn mehrere Werkzeugdatenhalterungen und ein übergeordnetes Managementsystem in einer weiteren Datenverarbeitungsanlage zentral verwaltet wird.

Eine übersichtliche und schnelle Verwaltung ist möglich, wenn die Verwaltung des gesamten Bestands der anwendungsspezifischen und maschinenbezogenen Konfiguration mittels Verweisen auf gespeicherte Werkzeugdatensätze erfolgt. Vorteilhaft ist dabei insbesondere die redundanzfreie Verwaltung von Werkzeugdaten und/oder Werkzeuglistendaten.

Eine übersichtliche Anordnung, gute Bedienerfreundlichkeit, und bessere Fehlerkorrektur ist möglich, wenn eine frei definierbare hierarchische Klassifizierung, Verwaltung und Darstellung der Werkzeugdatensätze erfolgt. Zudem wird hierdurch eine Effiziensteigerung bei der Verwaltung und/oder automatischen Suche z.B. nach Ersatzwerkzeugen für ausgefallene Werkzeuge möglich.

Vorteilhaft ist es, wenn die Verwaltung mittels maschinenunabhängigen/maschinenübergreifenden Werkzeuglisten, insbesondere mittels Vorlagen zur Vorkonfiguration, erfolgt. Durch die Verwaltung von maschinenabhängigen, insbesondere Platzdaten, d.h. den Werkzeugspeicher betreffende und maschinenunabhängige, insbesondere Werkzeugdaten, d.h. das Werkzeug betreffende Daten liegt eine größere Variabilität des Systems vor. Es ist vorteilhaft, maschinen- bzw. anwendungsfallabhängige und maschinenunabhängige Werkzeugdaten getrennt und möglichst transparent zu verwalten.

Vorteilhaft ist es, wenn frei definierbare, erweiterbare Werkzeugdaten abgespeichert werden. Der Anwender ist nicht an einen festen Werkzeugdatensatz gebunden, sondern kann je nach Bedarf Daten hinzufügen.

Dabei werden vorteilhafterweise verschiedene Datentypen unterstützt, so dass unterschiedliche Datentypen in einem Werkzeugdatensatz bearbeitet werden können.

Um eine gewisse Regulierung und Begrenzung der Werteingaben zu erreichen, kann vorteilhafterweise zu jedem Werkzeugdatum ein Wertebereich definiert werden, der insbesondere durch Maximal- und/oder Minimalwerte definiert ist, und optional eine Wertebereichsprüfung eingeschaltet werden.

Eine systematische Ordnung und bessere Suche ist möglich, wenn eine Klassifikation der Werkzeugdaten eingeführt wird, die erweiterbar ist.

Zur Hilfestellung und Anleitung für den Anwender ist es vorteilhaft, wenn eine Werkzeugbibliothek als Vorlage zum Herstellen von Werkzeugen erstellt wird, in der Werkzeugeigenschaften definiert sind und die mit Herstellen des Werkzeugs aktualisiert werden kann. De Aktualisierung erfolgt vorteilhafterweise automatisch.

Vorteilhaft ist es, wenn die Werkzeugbibliothek vordefinierte Variablendefinitionen mit dem Werkzeug angepasster Bedeutung hat, die einer Werkzeuggruppendefinition und/oder einem Werkzeug zugewiesen werden können. Die Werkzeuggruppenbibliothek weist eine Liste von vordefinierten erweiterten Werkzeugdatendefinitionen auf, d.h. vordefinierte Variablendefinitionen mit festgelegter Bedeutung. Jeder Werkzeuggruppendefinition und jedem Werkzeug kann eine Menge dieser vordefinierten Werkzeugdatenzugewiesen werden. Die vordefinierten Werkzeugdaten können über eine Schnittstelle von anderen Applikationen abgefragt werden, z.b. dem NC-Programmiersystem. Der Anwender kann die erweiterten Werkzeugdatendefinitionen ebenfalls ergänzen und entsprechend den jeweiliegen Anforderungen, z.B. Namenskonventionen, ergänzen.

Vorteilhaft für eine leichte Anpassung an andere Systeme ist es, wenn an andere Anwendungen angepasste variable Variablendefinitionen vorgenommen werden können.

Es ist eine Verwaltung des gesamten Bestands bzw.einer beliebigen Anzahl von getrennt verwalteten Untermengen des gesamten Bestands von Werkzeugen/Werkzeugdaten sowie der anwendungsfall- und maschinenbezogenen Konfiguration möglich.

Möglich ist auch eine frei definierbare mehrstufige Klassifizierung der Werkzeuge/Werkzeugdaten. Durch die Erfindung werden Vorlagen zur vereinfachten Erstellung und Konfiguration von Werkzeugen und Werkzeuglisten unterstützt.

Die Erfindung wird anhand von in den Figuren dargestellten Ausführungsbeispielen näher erläutert. Es zeigen:
Fig. 1 eine schematische Übersicht einer NC-Steuerung, die mit einer Bedienoberfläche (z. B. auf einem PC) nach dem erfindungsgemäßen Verfahren zusammenwirkt,

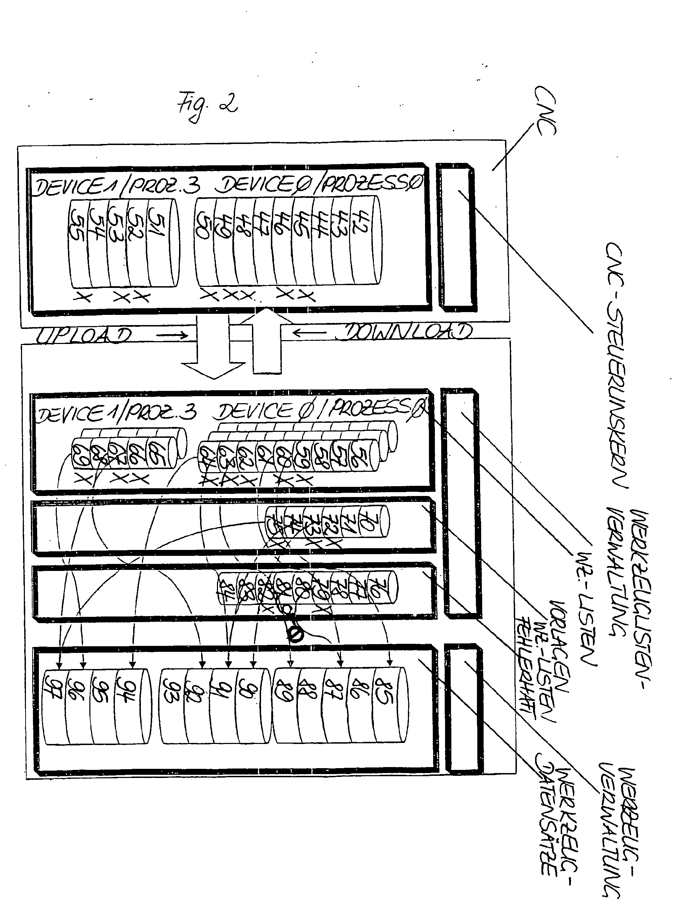

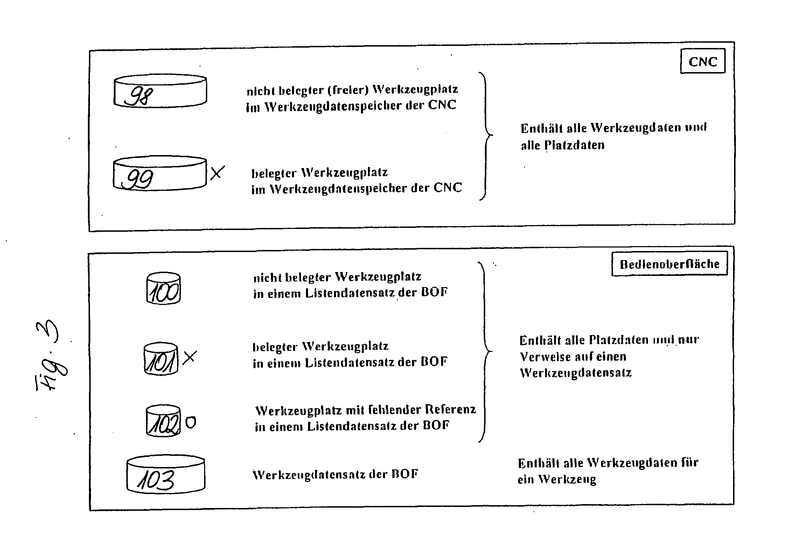

Figur 2 eine ebenfalls schematische Übersicht wie in Figur 1, aber mit einer gegenüber der Figur 1 erweiterten Datenstruktur.

Die Figuren sind lediglich schematisch gehalten, d. h. sie zeigen in einer Übersicht Symbole für Datenbanken, Listendatensätze, Zeigervariablen, Download-/Upload-Funktionen etc.

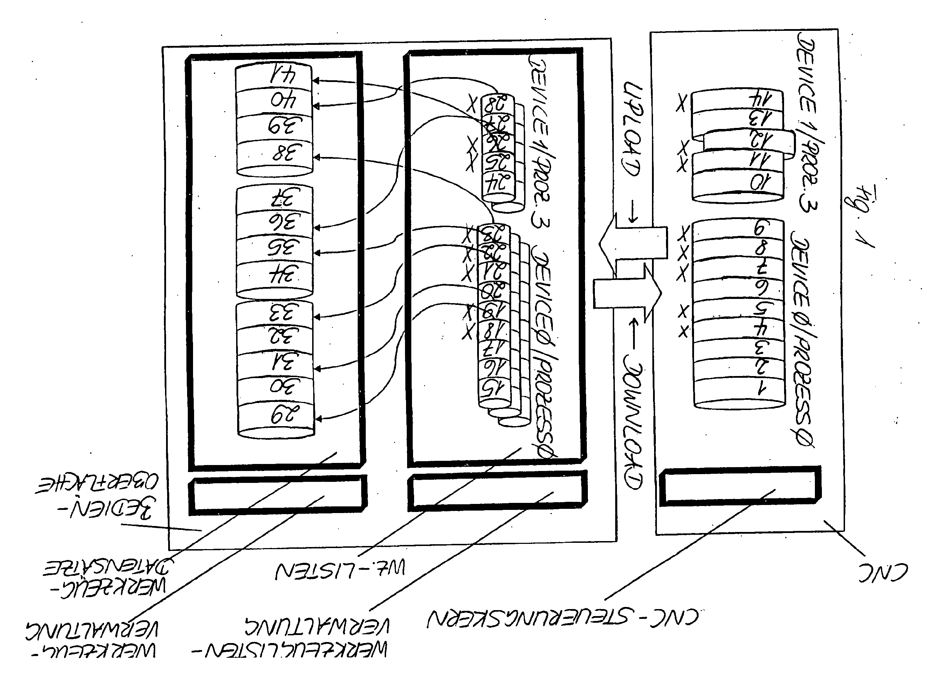

In Figur 1 ist (links) eine CNC-Steuerung schematisch mit den wesentlichen Bestandteilen gezeigt; hierzu gehört der CNC-Steuerungskem, in dem die Echtzeit-relevanten Prozesse einer Bearbeitungsmaschine, insbesondere einer Werkzeugmaschine, - beispielsweise in Form eines CNC-Programms - abgearbeitet werden. Dies erfolgt nach Art eine Satzabarbeitung in der CNC. Die NC-Steuerung kann auch als NC-Datenverarbeitungseinheit bezeichnet sein.

Zusätzlich ist in Figur 1 (rechts) eine hier als Bedienoberfläche gezeigte Einheit dargestellt, die beispielsweise in einer EDV-Anlage, z. B. einem PC, realisiert sein kann.

Bild 1 soll das Prinzip der zugrundeliegenden Datenhaltung verdeutlichen. Dabei bildet die Gesamtheit von CNC bzw. Bedienoberfläche die Prozesse und die verwendeten Werkzeuge einer Werkzeugmaschine ab und ist nach Maßgabe der Bearbeitungsprozesse einer solchen Werkzeugmaschine konfiguriert.

Der mittlere Block "Werkzeuglistenverwaltung" zeigt 3 Listendatensätze, welche dem Device 0/ Prozess 0 eines Maschinensystems (z.B. Fräsbearbeitungszentrum 1) und 2 Listendatensätze, welche dem Device 1/ Prozess 3 (z.B. Fräsmaschine 2) zugeordnet sind. Ihre Eigenschaften (Anzahl und Typ der Platzdatensätze) beziehen die Listendatensätze jeweils aus der speziellen Maschinenkonfiguration. Die 3 Listendatensätze des Prozesses 0 haben alle den gleichen Aufbau (1 Spindel; 1 Greifer; 7 Magazinplätze) aber unterschiedliche Platzinformationen zur Bearbeitung unterschiedlicher Werkstücke. Jeder Listendatensatz besteht also wiederum aus 9 Platzdatensätzen. Jeder dieser Platzdatensätze enthält alle, den Werkzeugspeicherplatz definierenden Daten und darüber hinaus, wenn dieser ein Werkzeug enthält, einen Verweis auf den zugeordneten Werkzeugdatensatz in der Werkzeugverwaltung. Der linke Block, welcher die Daten der CNC- Steuerung symbolisiert, enthält dagegen alle für die NC- Bearbeitung notwendigen Daten (Platz- und Werkzeugdaten) zusammen in einem kombinierten Werkzeug-/Platz-Datensatz. Soll eine Werkzeugliste in die CNC geladen werden (Download), so werden die Platzdaten aus der Werkzeuglistenverwaltung und die Werkzeugdaten aus der Werkzeugverwaltung kombiniert in die Steuerung übertragen. Vor einer solchen Downloadfunktionen werden jedoch alle enthaltenen Datensätze durch eine inhärente Upload-Funktion der verwendeten Werkzeugdaten vorher in der Werkzeugverwaltung aktualisiert. Werkzeugdaten, welche in mehreren Listendatensätzen vorkommen, sind damit zum Zeitpunkt der Übertragung in die Steuerung immer aktuell.

Bild 2 zeigt, dass zusätzlich die Möglichkeit der Erstellung prozessunabhängiger Listendatensätze in der Produktionsvorbereitung besteht.

Ausserdem soll in diesem Bild deutlich gemacht werden, dass Listen mit Verweisen auf nicht (mehr) vorhandene, d.h. aus der Werkzeugveraltung gelöschte, Werkzeuge einer getrennten Listenverwaltung zugeführt werden. Durch vorbereitete Korrekturalgorithmen können diese Listen problemlos wieder in einsatzfähige Werkzeuglisten umgewandelt werden.

### Bezugszeichenliste

**Figur 1**
   - 1: S1
   - 2: G1
   - 3: M1
   - 4: M2 Spiralbohrer 10mm
   - 5: M3 Gewindebohrer 25mm
   - 6: M4
   - 7: M5 Stufenbohrer 5mm
   - 8: M6 Fräser 2000
   - 9: M7 Winkelfräser 20/3
   - 10: M1
   - 11: M2 Spezialfräser XX2-4
   - 12: M3 Kegelfräser
   - 13: M4
   - 14: M5 Spezialfräser
   - 15: S1
   - 16: G1
   - 17: M1
   - 18: M2
   - 19: M3
   - 20: M4
   - 21: M5
   - 22: M6
   - 23: M7
   - 24: M1
   - 25: M2
   - 26: M3
   - 27: M4
   - 28: M5
   - 29: Spiralbohrer 10mm
   - 30: Spiralbohrer 15mm
   - 31: Gewindebohrer 25mm
   - 32: Flachsenbohrer 15mm
   - 33: Stufenbohrer 5mm
   - 34: Nutfräser 100
   - 35: Fräser 2000
   - 36: Kegelfräser
   - 37: Igelfräser
   - 38: Winkelfräser 20/3
   - 39: Winkelfräser 21/5
   - 40: Spezialfräser
   - 41: Spezialfräser XX2-4
**Figur 2**
   - 42: S1
   - 43: G1
   - 44: M1
   - 45: M2 Spiralbohrer 10mm
   - 46: M3 Gewindebohrer 25mm
   - 47: M4
   - 48: M5 Stufenbohrer
   - 49: M6 Fräser 2000
   - 50: M7 Winkelfräser
   - 51: M1
   - 52: M2 SpezialfräserXX2-4
   - 53: M3 Kegelfräser
   - 54: M4
   - 55: M5 Spezialfräser
   - 56: S1
   - 57: G1
   - 58: M1
   - 59: M2
   - 60: M3
   - 61: M4
   - 62: M5
   - 63: M6
   - 64: M7
   - 65: M1
   - 66: M2
   - 67: M3
   - 68: M4
   - 69: M5
   - 70: S1
   - 71: S2
   - 72: M1
   - 73: M2
   - 74: M3
   - 75: M4
   - 76: S1
   - 77: G1
   - 78: M1
   - 79: M2
   - 80: M3
   - 81: M4
   - 82: M5
   - 83: M6
   - 84: M7
   - 85: Spiralbohrer 10mm
   - 86: Spiralbohrer 15mm
   - 87: Gewindebohrer 25mm
   - 88: Flachsenkbohrer 15mm
   - 89: Stufenbohrer 5mm
   - 90: Nutfräser 100
   - 91: Fräser 2000
   - 92: Kegelfräser
   - 93: Igelfräser
   - 94: Winkelfräser 20/3
   - 95: Winkelfräser 21/5
   - 96: Spezialfräser
   - 97: Spezialfräser XX2-4
**Figur 3**
   - 98: M1
   - 99: M5 Spezialfräser
   - 100: M1
   - 101: M5
   - 102: M3
   - 103: Spezialfräser

## Patentansprüche

1. Verfahren zur Vorbereitung, Aufbereitung und Wartung von Werkzeugdatensätzen für Bearbeitungsprozesse in einer NC-Steuerung mit zumindest einer bezüglich der Steuerung separaten Werkzeugdatenhaltung, die im Speicher einer EDV-Anlage abgelegt ist, wobei die Werkzeugdatenhaltung Werkzeugdatensätze für Werkzeuge aufweist, die für jedes der zu verwendenden Werkzeuge jeweils den Platz für statische und dynamische Daten, d. h. im NC-Bearbeitungsprozess Änderungen unterworfenen Daten, aufweisen, und wobei die Werkzeugdatenhaltung separate Listendatensätze eines Bearbeitungsprozesses aufweist, die jeweils einen Verweis auf den zugehörigen Werkzeugdatensatz enthalten können, und die benötigten Listendatensätze zusammen mit den zugehörigen Werkzeugdatensätzen zur Prozessabarbeitung in der NC-Datenverarbeitungseinheit übermittelt und gespeichert werden, wobei zumindest die dynamischen Daten der Werkzeugdatensätze nach Maßgabe der aktuellen NC-Bearbeitungsprozesse aktualisiert werden können,
wobei es sich um eine NC-Steuerung einer Werkzeugmaschine handelt, wobei die NC-Steuerung eine Steuerung mit zentraler oder dezentraler Werkzeugverwaltung ist, wobei ohne Beteiligung der Werkzeugverwaltung ein Werkzeugdatensatz anhand vorhandener Werkzeuge nach Maßgabe der zugrundeliegenden Bearbeitungsprozesse erstellt wird, so dass dieser von der Werkzeugverwaltung erkennbar und korrekt eingruppierbar ist, und wobei dieser anschließend von der Werkzeugverwaltung importiert wird, wobei Listen mit Verweisen auf nicht oder nicht mehr vorhandene, aus der Werkzeugverwaltung gelöschte Werkzeuge, einer getrennten Listenverwaltung zugeführt werden.

2. Verfahren nach Anspruch 1, wobei auch statische Daten der Werkzeugdatensätze nach Maßgabe der aktuellen NC-Bearbeitungsprozesse aktualisiert werden können.

3. Verfahren nach Anspruch 1 oder 2, **dadurch gekennzeichnet, dass** eine automatische Erkennung von fehlerhafte/inkonsistenten Werkzeuglisten erfolgt.

4. Verfahren nach einem der Ansprüche 1 bis 3, **dadurch gekennzeichnet, dass** eine automatische Reparatur von fehlerhaften/inkonsistenten Werkzeuglisten erfolgt.

5. Verfahren nach einem der Ansprüche 1 bis 4, **dadurch gekennzeichnet, dass** eine automatische Werkzeugerkennung von in der CNC-Steuerung definierten neuen erzeugten Werkzeugen erfolgt.

6. Verfahren nach einem der Ansprüche 1 bis 5, **dadurch gekennzeichnet, dass** die Werkzeugverwaltung die neu erstellten Werkzeuge erkennt und entsprechend ihren Eigenschaften gruppiert und verwaltet.

7. Verfahren nach einem der Ansprüche 1 bis 6, **dadurch gekennzeichnet, dass** bei ausreichender Erkennung, d. h. Übereinstimmung mit einer vorbekannten Datensatzstruktur und vollständiger Werkzeugspezifikation eine vollständige Eingruppierung erfolgt.

8. Verfahren nach einem der Ansprüche 1 bis 7. **dadurch gekennzeichnet, dass** bei unvollständigen oder fehlerhaften Werkzeugdatensätzen eine Eingruppierung als unvollständiger Datensatz erfolgt.

9. Verfahren nach einem der Ansprüche 1 bis 8, **dadurch gekennzeichnet, dass** Platzdaten aus der Werkzeuglistenverwaltung und Werkzeugdaten aus der Werkzeugverwaltung kombiniert in die Steuerung downgeloaded werden.

10. Verfahren nach einem der Ansprüche 1 bis 9, **dadurch gekennzeichnet, dass** vor dem Downloaden zumindest ein Teil der Datensätze durch eine inhärente Upload-Funktion der verwendeten Werkzeugdaten vorher in der Werkzeugverwaltung aktualisiert werden.

11. Verfahren nach einem der Ansprüche 1 bis 10, **dadurch gekennzeichnet, dass** Vorlagen mit Anwenderdaten, d. h. spezifische Werkzeugdaten, zur Erstellung und Konfiguration von Werkzeugen und Werkzeuglisten erstellt werden.

12. Verfahren nach einem der Ansprüche 1 bis 11, **dadurch gekennzeichnet, dass** mehrere NC-Steuerungen und eine lokal/dezentrale Werkzeugdatenhalterung eingesetzt werden.

13. Verfahren nach einem der Ansprüche 1 bis 12, **dadurch gekennzeichnet, dass** Untermengen des gesamten Bestands von Werkzeugen und/oder Werkzeugdaten getrennt verwaltet werden.

14. Verfahren nach einem der Ansprüche 1 bis 13, **dadurch gekennzeichnet, dass** eine getrennte Verwaltung von anwenderspezifischen, insbesondere Platzdaten, und werkzeugabhängigen Werkzeugdaten erfolgt.

15. Verfahren nach einem der Ansprüche 1 bis 14, **dadurch gekennzeichnet, dass** der gesamte Werkzeugbestand an Werkzeugen und/oder Werkzeugdaten einer oder mehrerer Maschinen mittels eines Computers verwaltet werden kann.

16. Verfahren nach einem der Ansprüche 1 bis 15, **dadurch gekennzeichnet, dass** mehrere Werkzeugdatenhalterungen und ein übergeordnetes Managementsystem in einer weiteren Datenverarbeitungsanlage zentral verwaltet wird.

17. Verfahren nach einem der Ansprüche 1 bis 16, **dadurch gekennzeichnet, dass** die Verwaltung des gesamten Bestands der anwendungsspezifischen und maschinenbezogenen Konfiguration mittels Verweisen auf gespeicherte Werkzeugdatensätze erfolgt.

18. Verfahren nach einem der Ansprüche 1 bis 17, **dadurch gekennzeichnet, dass** eine frei definierbare hierarchische Klassifizierung, Verwaltung und Darstellung der Werkzeugdatensätze erfolgt.

19. Verfahren nach einem der Ansprüche 1 bis 18, **dadurch gekennzeichnet, dass** die Verwaltung mittels maschinenunabhängigen/maschinenübergreifenden Werkzeuglisten, insbesondere mittels Vorlagen zur Vorkonfiguration, erfolgt.

20. Verfahren nach einem der Ansprüche 1 bis 19, **dadurch gekennzeichnet, dass** frei definierbare, erweiterbare Werkzeugdaten abgespeichert werden.

21. Verfahren nach einem der Ansprüche 1 bis 20, **dadurch gekennzeichnet, dass** unterschiedliche Datentypen in einem Werkzeugdatensatz bearbeitet werden können.

22. Verfahren nach einem der Ansprüche 1 bis 21, **dadurch gekennzeichnet, dass** zu jedem Werkzeugdatum ein Wertebereich definiert werden kann, der insbesondere durch Maximal- und/oder Minimalwerte definiert ist, und optional eine Wertebereichsprüfung eingeschaltet werden kann.

23. Verfahren nach einem der Ansprüche 1 bis 22, **dadurch gekennzeichnet, dass** eine Klassifikation der Werkzeugdaten, eingeführt wird, die erweiterbar ist.

24. Verfahren nach einem der Ansprüche 1 bis 23, **dadurch gekennzeichnet, dass** eine Werkzeugbibliothek als Vorlage zum Herstellen von Werkzeugen erstellt wird, in der Werkzeugeigenschaften definiert sind und die mit Herstellen des Werkzeugs aktualisiert werden kann.

25. Verfahren nach einem der Ansprüche 1 bis 24, **dadurch gekennzeichnet, dass** die Werkzeugbibliothek vordefinierte Variablendefinitionen mit dem Werkzeug angepasster Bedeutung hat, die einer Werkzeuggruppendefinition und/oder einem Werkzeug zugewiesen werden können.

26. Verfahren nach einem der Ansprüche 1 bis 25, **dadurch gekennzeichnet, dass** an andere Anwendungen angepasste variable Variablendefinitionen vorgenommen werden können.

27. Verfahren nach einem der Ansprüche 1 bis 26, dadurch gekenntzeichnet, dass Differenzlisten und/oder Teillisten gebildet und behandelt werden.

## Claims

1. Method for preparing, conditioning and maintaining tool data records for machining processes in an NC controller having at least one tool data store, which is separate in terms of the controller and which is stored in the memory of an EDP installation, wherein the tool data store has tool data records for tools that, for each of the tools to be used, each have the space for static and dynamic data, i.e. data subject to changes in the NC machining process, and wherein the tool data store has separate list data records for a machining process that can each contain a reference to the associated tool data record, and the required list data records together with the associated tool data records for process machining are transmitted and stored in the NC data processing unit, wherein at least the dynamic data of the tool data records can be updated in accordance with the current NC machining processes,
wherein an NC controller for a machine tool is involved, wherein the NC controller is a controller with a central or peripheral tool manager, wherein without the involvement of the tool manager a tool data record is created using available tools in accordance with the underlying machining processes, so that said tool data record can be identified and correctly categorised by the tool manager, and wherein said tool data record is then imported by the tool manager, wherein lists with references to tools that are not or no longer available and have been erased from the tool manager are supplied to a separate list manager.

2. Method according to Claim 1, wherein static data in the tool data records can also be updated in accordance with the current NC machining processes.

3. Method according to Claim 1 or 2, **characterized in that** incorrect/inconsistent tool lists are automatically identified.

4. Method according to one of Claims 1 to 3, **characterized in that** incorrect/inconsistent tool lists are automatically repaired.

5. Method according to one of Claims 1 to 4, **characterized in that** newly produced tools that are defined in the CNC controller are automatically identified as tools.

6. Method according to one of Claims 1 to 5, **characterized in that** the tool manager identifies the newly created tools and sorts and manages them in line with their properties.

7. Method according to one of Claims 1 to 6, **characterized in that** adequate identification, i.e. match with a previously known data record structure, and complete tool specification prompt complete classification.

8. Method according to one of Claims 1 to 7, **characterized in that** incomplete or incorrect tool data records prompt classification as an incomplete data record.

9. Method according to one of Claims 1 to 8, **characterized in that** space data are downloaded from the tool list manager and tool data are downloaded from the tool manager to the controller in combination.

10. Method according to Claims 1 to 9, **characterized in that** prior to the download at least some of the data records are updated in the tool manager beforehand by an inherent upload function for the tool data used.

11. Method according to one of Claims 1 to 10, **characterized in that** templates with user data, i.e. specific tool data, are created for the purpose of creating and configuring tools and tool lists.

12. Method according to one of Claims 1 to 11, **characterized in that** a plurality of NC controllers and a local/peripheral tool data store are used.

13. Method according to one of Claims 1 to 12, **characterized in that** subsets of the whole inventory of tools and/or tool data are managed separately.

14. Method according to one of Claims 1 to 13, **characterized in that** separate management is performed for user-specific tool data, particularly space data, and tool-dependent tool data.

15. Method according to one of Claims 1 to 14, **characterized in that** the whole tool inventory of tools and/or tool data for one or more machines can be managed by means of a computer.

16. Method according to one of Claims 1 to 15, **characterized in that** a plurality of tool data stores and a superordinate management system are managed centrally in a further data processing installation.

17. Method according to one of Claims 1 to 16, **characterized in that** the whole inventory of the application-specific and machine-related configuration is managed by means of references to stored tool data records.

18. Method according to one of Claims 1 to 17, **characterized in that** user-definable hierarchic classification, management and presentation of the tool data records are effected.

19. Method according to one of Claims 1 to 18, **characterized in that** the management is effected by means of machine-independent/machine-spanning tool lists, particularly by means of templates for pre-configuration.

20. Method according to one of Claims 1 to 19, **characterized in that** user-definable, extendable tool data are stored.

21. Method according to one of Claims 1 to 20, **characterized in that** different data types can be handled in a tool data record.

22. Method according to one of Claims 1 to 21, **characterized in that** for each tool datum a range of values can be defined that is defined particularly by maximum and/or minimum values, and optionally a value range check can be engaged.

23. Method according to one of Claims 1 to 22, **characterized in that** classification of the tool data is introduced, which is extendable.

24. Method according to one of Claims 1 to 23, **characterized in that** a tool library is created as a template for the manufacture of tools, said tool library having definitions for tool properties and being able to be updated when the tool is manufactured.

25. Method according to one of Claims 1 to 24, **characterized in that** the tool library has predefined variable definitions with the tool of customised significance that are able to be assigned to a tool group definition and/or to a tool.

26. Method according to one of Claims 1 to 25, **characterized in that** variable definitions of variables that are customised for further applications can be performed.

27. Method according to one of Claims 1 to 26, **characterized in that** difference lists and/or partial lists are formed and dealt with.

## Revendications

1. Procédé de préparation, de conditionnement et de maintenance de jeux de données d'outil pour des processus d'usinage dans une commande CN comprenant au moins un entrepôt de données d'outil indépendant par rapport à la commande, lequel est stocké dans la mémoire d'un équipement informatique, l'entrepôt de données d'outil possédant des jeux de données d'outil pour des outils, lesquels possèdent pour chacun des outils à utiliser à chaque fois un emplacement pour des données statiques et dynamiques, c'est-à-dire des données qui sont soumises à des modifications dans le processus d'usinage à CN, et l'entrepôt de données d'outil possédant des jeux de données de listes séparés d'un processus d'usinage, lesquels peuvent respectivement contenir un renvoi au jeu de données d'outil associé, et les jeux de données de listes nécessaires étant communiqués et enregistrés dans l'unité de traitement de données de CN conjointement avec les jeux de données d'outil associés en vue de l'usinage du processus, au moins les données dynamiques des jeux de données d'outil pouvant être actualisées en fonction des processus d'usinage à CN actuels,
la commande CN étant celle d'une machine-outil, la commande CN étant une commande avec gestion centralisée ou décentralisée des outils, un jeu de données d'outil étant créé au moyen des outils existants d'après les indications des processus d'usinage sous-jacents sans participation du gestionnaire d'outils, et celui-ci étant ensuite importé par le gestionnaire d'outils, les listes qui contiennent des renvois vers des outils inexistants ou n'existant plus, effacés du gestionnaire d'outils, étant acheminées à un gestionnaire de listes séparé.

2. Procédé selon la revendication 1, selon lequel également des données statiques des jeux de données d'outil peuvent être actualisées d'après les indications des processus d'usinage à CN actuels.

3. Procédé selon la revendication 1 ou 2, **caractérisé en ce qu'**une reconnaissance automatique des listes d'outils erronées/incohérentes est effectuée.

4. Procédé selon l'une des revendications 1 à 3, **caractérisé en ce qu'**une réparation automatique des listes d'outils erronées/incohérentes est effectuée.

5. Procédé selon l'une des revendications 1 à 4, **caractérisé en ce qu'**une reconnaissance d'outil automatique est effectuée pour les outils nouvellement générés définis dans la commande CN.

6. Procédé selon l'une des revendications 1 à 5, **caractérisé en ce que** le gestionnaire d'outils reconnaît les outils nouvellement créés, et les regroupe et les gère en fonction de leurs caractéristiques.

7. Procédé selon l'une des revendications 1 à 6, **caractérisé en ce qu'**en présence d'une reconnaissance suffisante, c'est-à-dire d'une concordance avec une structure de jeu de données préalablement connue, et d'une spécification d'outil complète, il se produit un regroupement complet.

8. Procédé selon l'une des revendications 1 à 7, **caractérisé en ce qu'**en présence de jeux de données d'outil incomplets ou erronés, un regroupement en tant que jeu de données incomplet est effectué.

9. Procédé selon l'une des revendications 1 à 8, **caractérisé en ce que** les données d'emplacement issues du gestionnaire de listes d'outils et les données d'outil issues du gestionnaire d'outils sont téléchargées combinées dans la commande.

10. Procédé selon l'une des revendications 1 à 9, **caractérisé en ce qu'**avant le téléchargement, au moins une partie des jeux de données est actualisée préalablement dans le gestionnaire d'outils par une fonction de téléversement inhérente des données d'outil utilisées.

11. Procédé selon l'une des revendications 1 à 10, **caractérisé en ce que** des modèles comprenant des données d'utilisateur, c'est-à-dire des données d'outil spécifiques, sont créés en vue de la création et de la configuration d'outils et de listes d'outils.

12. Procédé selon l'une des revendications 1 à 11, **caractérisé en ce que** plusieurs commandes CN ainsi qu'un entrepôt de données d'outil local/décentralisé sont utilisés.

13. Procédé selon l'une des revendications 1 à 12, **caractérisé en ce que** des sous-ensembles du parc complet d'outils et/ou de données d'outil sont gérés séparément.

14. Procédé selon l'une des revendications 1 à 13, **caractérisé en ce qu'**une gestion séparée des données d'outil, notamment des données d'emplacement, spécifiques à l'utilisateur et des données d'outil dépendantes des outils est effectuée.

15. Procédé selon l'une des revendications 1 à 14, **caractérisé en ce que** le parc d'outils complet d'outils et/ou de données d'outil d'une ou plusieurs machines peut être géré au moyen d'un ordinateur.

16. Procédé selon l'une des revendications 1 à 15, **caractérisé en ce que** plusieurs entrepôts de données d'outil et un système de gestion superviseur sont gérés de manière centralisée dans un équipement de traitement de données supplémentaire.

17. Procédé selon l'une des revendications 1 à 16, **caractérisé en ce que** la gestion du parc complet de la configuration spécifique à l'application et rapportée à la machine s'effectue au moyen de renvois à des jeux de données d'outil mémorisés.

18. Procédé selon l'une des revendications 1 à 17, **caractérisé en ce qu'**une classification, une gestion et une représentation hiérarchiques définissables librement des jeux de données d'outil sont effectuées.

19. Procédé selon l'une des revendications 1 à 18, **caractérisé en ce que** la gestion s'effectue au moyen de listes d'outils indépendantes de la machine/s'appliquant à l'ensemble des machines, notamment au moyen de modèles servant à la préconfiguration.

20. Procédé selon l'une des revendications 1 à 19, **caractérisé en ce que** des données d'outil extensibles et définissables librement sont mises en mémoire.

21. Procédé selon l'une des revendications 1 à 20, **caractérisé en ce que** des types de données différents dans un jeu de données d'outil peuvent être traités.

22. Procédé selon l'une des revendications 1 à 21, **caractérisé en ce que** pour chaque origine d'outil, il est possible de définir une plage de valeurs qui est notamment définie par des valeurs minimales et/ou maximales, et un contrôle de plage de valeurs peut être activé en option.

23. Procédé selon l'une des revendications 1 à 22, **caractérisé en ce qu'**une classification des données d'outil est adoptée, laquelle est extensible.

24. Procédé selon l'une des revendications 1 à 23, **caractérisé en ce qu'**une bibliothèque d'outils faisant office de modèle pour la création d'outils est créée, dans laquelle sont définies des caractéristiques d'outil et laquelle peut être actualisée avec la création de l'outil.

25. Procédé selon l'une des revendications 1 à 24, **caractérisé en ce que** la bibliothèque d'outils possède des définitions de variables prédéfinies avec une signification adaptée à l'outil, lesquelles peuvent être affectées à une définition de groupe d'outils et/ou à un outil.

26. Procédé selon l'une des revendications 1 à 25, **caractérisé en ce que** des définitions de variables variables adaptées à d'autres applications peuvent être réalisées.

27. Procédé selon l'une des revendications 1 à 26, **caractérisé en ce que** des listes de différences et/ou des listes partielles sont formées et gérées.
